# EUROPÄISCHE PATENTSCHRIFT

(11) **EP 3 825 085 B1**
(45) Veröffentlichungstag und Bekanntmachung des Hinweises auf die Patenterteilung: **02.07.2025**
(21) Anmeldenummer: 20198350.9
(22) Anmeldetag: 25.09.2020
(51) Int. Cl.: B27G 13/00, B27G 13/08, B27B 9/04

(54) **ANORDNUNG AUS NUTFRÄSE ODER HANDKREISSÄGE UND VERFAHREN ZUM ERMITTELN VON GEOMETRIEEINSTELLUNGEN**
ARRANGEMENT OF ROUTER OR CIRCULAR SAW AND METHOD FOR DETERMINING GEOMETRY SETTINGS
ASSEMBLAGE AVEC UNE RAINUREUSE OU UNE SCIE CIRCULAIRE À MAIN ET PROCÉDÉ DE DÉTERMINATION DES RÉGLAGES GÉOMÉTRIQUES

(30) Priorität: 21.11.2019 DE 102019131527
(43) Veröffentlichungstag der Anmeldung: 26.05.2021
(73) Patentinhaber: Mafell AG, 78727 Oberndorf a.N. (DE)
(72) Erfinder: Hirneise, Johannes, 72202 Nagold (DE); Pfau, Helmut, 72348 Alpirsbach (DE); Hähnle, Oliver, 72461 Albstadt (DE); Zimmermann, Horst, 72160 Horb-Betra (DE); Frick, Martina, 78727 Oberndorf (DE)
(74) Vertreter: Manitz Finsterwald Patent- und Rechtsanwaltspartnerschaft mbB

(56) Entgegenhaltungen:
- EP-A2- 1 258 328
- WO-A1-2017/217907
- WO-A2-2012/047736
- CA-A1- 2 540 229
- DE-A1- 102009 029 426
- DE-A1- 102016 210 770
- DE-A1- 102017 109 586
- DE-A1- 19 713 844
- DE-U1- 202018 103 332
- US-A1- 2004 010 926
- US-A1- 2006 113 003
- US-B1- 9 114 546

## Beschreibung

Die Erfindung betrifft eine Anordnung aus Nutfräse oder Handkreissäge und aus einer Führungsschiene gemäß dem Oberbegriff des Anspruchs 1. Eine solche Anordnung ist aus dem Dokument WO 2012/047736 A2 bekannt. Zudem betrifft die Erfindung ein Verfahren zum Ermitteln von Geometrieeinstellungen für eine Handwerkzeugmaschine nach Anspruch 3.

Eine Nutfräse umfasst zum Beispiel einen zu einer Rotation antreibbaren Fräskopf. Der Fräskopf ist zum Beispiel im Wesentlichen scheiben- oder zylinderförmig ausgebildet. Über den Umfang des Fräskopfes sind insbesondere mehrere Schneidelemente, wie zum Beispiel Wendeschneidplatten, verteilt angeordnet. Eine Rotationsachse des Fräskopfes ist - falls der Fräskopf neigbar ist, zumindest in einer Ausgangsstellung - insbesondere parallel zu einer Werkstückoberfläche ausgerichtet, auf der eine Basis, insbesondere eine Grundplatte, der Nutfräse während der Bearbeitung aufliegt. Eine Basis der Nutfräse wird zum Beispiel unmittelbar auf die Werkstückoberfläche aufgesetzt oder auf eine Führungsschiene aufgesetzt, die auf der Werkstückoberfläche aufliegt. Der Fräskopf kann neigbar mit der Basis verbunden sein. Dabei kann eine Neigungsachse parallel zur einer Bearbeitungs- oder Vorschubrichtung angeordnet sein. In einer geraden Stellung oder Ausgangsstellung wird durch den Fräskopf eine im Querschnitt rechteckige Nut eingebracht. In einer geneigten Stellung ist die Nut, bei entsprechend eingestellter Bearbeitungstiefe, im Querschnitt dreieckig. Derartige Nuten werden zum Beispiel bei der Ständerbauweise im Holzbau benötigt.

Allgemein kann eine Handwerkzeugmaschine beispielsweise elektrisch angetrieben sein. Eine solche Handwerkzeugmaschine wird auch als Elektrohandwerkzeug bezeichnet. Insbesondere kann ein Stromversorgungskabel und/oder ein Akku vorgesehen sein.

Die Erfindung betrifft eine Anordnung aus einer Nutfräse oder Handkreissäge, insbesondere für die Holzbearbeitung, umfassend ein zu einer Rotation antreibbares Schneidwerkzeug, insbesondere Sägeblatt oder Fräskopf, und aus einer Führungsschiene zur Auflage auf ein Werkstück oder eine Führungsschiene für eine Nutfräse oder Handkreissäge zur Auflage auf ein Werkstück mit einem Seitenanschlag zum Eingriff in eine bestehende Nut oder mit einem seitlichen Ende des zu bearbeitenden Werkstücks, wobei der Seitenanschlag einen Abstand von der bestehenden Nut bzw. dem Werkstückende zum Schneidwerkzeug definiert.

Es ist eine Aufgabe, die Holzbearbeitung bzw. die Handhabung der Nutfräse oder Handkreissäge zu vereinfachen.

Diese Aufgabe wird durch eine Anordnung nach Anspruch 1 gelöst, und insbesondere dadurch, dass der Seitenanschlag an einem lösbar an der Führungsschiene befestigten Bauteil angeordnet ist und das Bauteil an der Führungsschiene durch eine Klemmmechanik befestigt ist, die in einen Vorsprung der Führungsschiene eingreift.

Da der Seitenanschlag den Abstand definiert, ist keine vorherige Markierung des Schnittweges nötig. Somit können Fräs- oder Sägearbeiten komfortabel ohne Markierung der einzelnen Bearbeitungsabschnitte durchgeführt werden. Dies ist insbesondere vorteilhaft für Arbeitsszenarien, bei denen mehrere Schnitte mit gleichem Abstand eingebracht werden sollen. Dabei kann insbesondere ein Schnitt durchgeführt werden und anschließend der Seitenanschlag mit einer, insbesondere rechten, Schnittkante in Eingriff gebracht werden, sodass ein gewünschter Abstand zwischen dem Schnitt und einem nächsten Schnitt definiert wird, welcher anschließend schnell und einfach eingebracht werden kann.

Bevorzugt kann der Abstand einstellbar sein. Dies kann zum Beispiel durch zwei relativ zueinander verschiebliche und in einem gewünschten Abstand arretierbare Elemente realisiert sein. Alternativ oder zusätzlich kann ein Bauteil, welches den Seitenanschlag aufweist, austauschbar sein, sodass verschiedene Bauteile mit Seitenanschlag für verschiedene Abstände angebracht werden können. Zum Beispiel können an der Nutfräse, Handkreissäge oder Führungsschiene alternativ oder zusätzlich auch verschiedene Befestigungspunkte für ein den Seitenanschlag aufweisendes Bauteil vorgesehen sein, die verschiedenen Abständen zugeordnet sind.

Das Bauteil ist lösbar an der Führungsschiene befestigt. Dies hat einerseits den Vorteil, dass der Seitenanschlag auf einfache Weise nur bei Bedarf verwendet werden kann und ansonsten nicht an der Handkreissäge, Nutfräse oder Führungsschiene befestigt wird. Außerdem kann das Bauteil so auf einfache Weise ausgetauscht werden, beispielsweise durch ein solches mit einem anderen Abstand.

Das Bauteil kann beispielsweise als Stab und/oder Arm ausgebildet sein. Das Bauteil kann sich insbesondere senkrecht zu einer Vorschubrichtung, Bearbeitungsrichtung und/oder einer Führungsschiene erstrecken. Der Seitenanschlag kann allgemein zum Beispiel einen Parallelanschlag bilden.

Ein den Seitenanschlag aufweisendes Bauteil kann beispielsweise in eine Basis der Nutfräse oder Handkreissäge oder in eine Führungsschiene eingeklemmt, eingespannt und/oder eingeclipst werden.

Die Erfindung betrifft außerdem ein Verfahren zum Ermitteln von Geometrieeinstellungen für eine Handwerkzeugmaschine, nämlich eine Nutfräse oder Handkreissäge.

Es ist eine Aufgabe, dem Benutzer der Maschine die für ein gewünschtes Bearbeitungsszenario notwendigen Geometrieeinstellungen schnell und auf einfache Weise bereitzustellen.

Diese Aufgabe wird durch ein Verfahren mit den in Anspruch 3 genannten Merkmalen gelöst. Dabei weist die Handwerkzeugmaschine einen maschinenlesbaren Code auf, wobei der maschinenlesbare Code mittels eines hierfür eingerichteten Lesegeräts gelesen wird. Anhand des vom Lesegerät gelesenen Codes werden geometrische Informationen der Handwerkzeugmaschine ermittelt. Es wird eine Eingabemöglichkeit für geometrische Wunscheigenschaften eines zu bearbeitenden Werkstücks, die die Dimension eines durch die Handwerkzeugmaschine erzeugbaren Schnitts betreffen, bereitgestellt. Nach Eingabe der Wunscheigenschaften werden die zum Erreichen dieser Eigenschaften nötigen Geometrieeinstellungen der Handwerkzeugmaschine anhand der geometrischen Informationen der Handwerkzeugmaschine automatisch ermittelt, insbesondere berechnet, und ausgegeben.

Die notwendigen Geometrieeinstellungen wurden vom Benutzer bisher üblicherweise anhand von an der Maschine angebrachten Skalen ermittelt. Dies ist jedoch relativ aufwendig und deckt häufig nicht den gesamten Bearbeitungsspielraum der Maschine ab. Durch das erfindungsgemäße Verfahren werden dem Benutzer die nötigen Geometrieeinstellungen schnell und einfach bereitgestellt, insbesondere für den gesamten Bearbeitungsspielraum und/oder für beliebige Werte der Wunscheigenschaften, insbesondere Zwischenwerte, die eine an der Maschine angebrachte Skala nicht abbildet.

Die geometrischen Informationen der Handwerkzeugmaschine umfassen insbesondere eine Position einer Neigungsachse relativ zu einer Basis und/oder Führungsschiene der Maschine und/oder eine Position eines Schneidwerkzeugs relativ zu einer Neigungsachse.

Der maschinenlesbare Code kann beispielsweise einen QR-Code und/oder einen Strichcode umfassen. Der Code kann allgemein zum Beispiel auf der Maschine aufgedruckt oder aufgeklebt sein. Der Code kann beispielsweise auch in Form eines NFC-Chips oder RFID-Chips vorgesehen sein.

Bei dem Lesegerät kann es sich bevorzugt um ein Smartphone oder einen Tabletcomputer handeln. Derartige Geräte sind weit verbreitet, sodass insbesondere ein Gerät verwendet wird, welches der Benutzer ohnehin besitzt. Es ist somit keine zusätzliche Hardware nötig.

Das Lesegerät kann allgemein bevorzugt internetfähig sein. Z.B. kann anhand des Codes eine Verbindung zu einem entfernten Server aufgebaut werden. Dem Server kann etwa ein Typ der Handwerkzeugmaschine und/oder die geometrischen Informationen übermittelt werden oder ihm sind diese bekannt, beispielsweise weil der Benutzer oder der Hersteller den Typ der Handwerkzeugmaschine beim Server hinterlegt hat.

Der Server kann insbesondere die Eingabemöglichkeit, die Ermittlung, insbesondere Berechnung, und/oder die Ausgabe bereitstellen, dies zum Beispiel in Form einer Webseite und/oder eines Browser-Applets. Allgemein kann der Server die Eingabemöglichkeit ohne eine auf dem Lesegerät installierte, dedizierte App bereitstellen, sondern beispielsweise über einen Internetbrowser. Grundsätzlich kann der Server aber zum Beispiel auch mit einer auf dem Gerät installierten App, insbesondere Hersteller-App, kommunizieren. Diese Maßnahmen unterstützen die Ortsunabhängigkeit der Ermittlung der Geometrieeinstellungen.

Die Wunscheigenschaften betreffen insbesondere Dimension, beispielsweise Form und/oder Größe, eines durch die Handwerkzeugmaschine erzeugbaren Schnittes, insbesondere einer Nut. Insbesondere umfassen die Wunscheigenschaften eine Schnitt- oder Nuttiefe und/oder einen Schnitt-, Nut- oder Werkzeugneigungswinkel. Gemäß einer Ausführungsform ist vorgesehen, dass die eingebbaren Wunscheigenschaften eine Bearbeitungstiefe, insbesondere senkrecht zu einer Werkstückoberfläche, umfassen.

Besonders bevorzugt können die eingebbaren Wunscheigenschaften eine geneigte Stellung eines Schneidwerkzeugs der Handwerkzeugmaschine betreffen. Alternativ oder zusätzlich können die Wunscheigenschaften etwa einen Neigungswinkel des Schneidwerkzeugs, insbesondere relativ zur Werkstückoberfläche, oder eine hierzu korrespondierende Information umfassen. Zu einem Neigungswinkel relativ zur Werkstückoberfläche korrespondiert z.B. ein Neigungswinkel relativ zu einer Normalen der Werkstückoberfläche. Die bei einem geneigten Schneidwerkzeug maßgeblichen geometrischen Zusammenhänge sind von einem Computer allgemein schnell und zuverlässig berechenbar, aber am Einsatzort der Maschine für den Benutzer unter Umständen nicht ohne weiteres ermittelbar. Für diesen Fall kann also das Ermittlungsverfahren dem Benutzer schnell und einfach die nötigen Geometrieeinstellungen bereitstellen.

Das Verfahren kann insbesondere die Bereitstellung eines Berechnungsprogramms für die Geometrieeinstellungen umfassen. Dieses kann z.B. über den auf der Maschine angebrachten Code, insbesondere QR-Code, aufgerufen werden. Hierüber werden bevorzugt wenigstens einzelne, insbesondere sämtliche, der folgenden Bearbeitungsgrößen angezeigt: Tiefe, Höhe, Breite und/oder Winkel eines Schnitts, insbesondere einer Nut; Einstellwerte an der Maschine, insbesondere Werkzeugtiefe und/oder Neigungswinkel des Werkzeugs. Insbesondere werden diese Werte für den Anwender berechnet.

Die klassischen Maschinenskalen werden durch die Erfindung letztlich erweitert. Dem Anwender können sämtliche Berechnungsarbeiten abgenommen werden. Über den Code, insbesondere in Verbindung mit einem internetfähigen Lesegerät, ist das Ermittlungsverfahren überall erreichbar und allgemein ortsunabhängig. Dies ist insbesondere für Handwerker auf einer Baustelle vorteilhaft.

Die verschiedenen Aspekte können insbesondere auch mit Vorteil untereinander kombiniert werden.

Die Erfindung wird nachfolgend lediglich beispielhaft anhand der schematischen Zeichnung erläutert.
- Fig. 1 bis 3: zeigen eine Nutfräse in verschiedenen perspektivischen Ansichten.
- Fig. 4 und 5: zeigen die Nutfräse in einer geneigten Stellung.
- Fig. 6: zeigt die Nutfräse mit einem Rissanzeiger.
- Fig. 7: zeigt die Nutfräse mit einem Seitenanschlag.
- Fig. 8: illustriert die geometrischen Eigenschaften einer durch die Nutfräse einbringbaren Nut im Querschnitt.
- Fig. 9: zeigt eine Maske eines Berechnungsprogramms für Geometrieeinstellungen, insbesondere der Nutfräse der Fig. 1 bis 3.

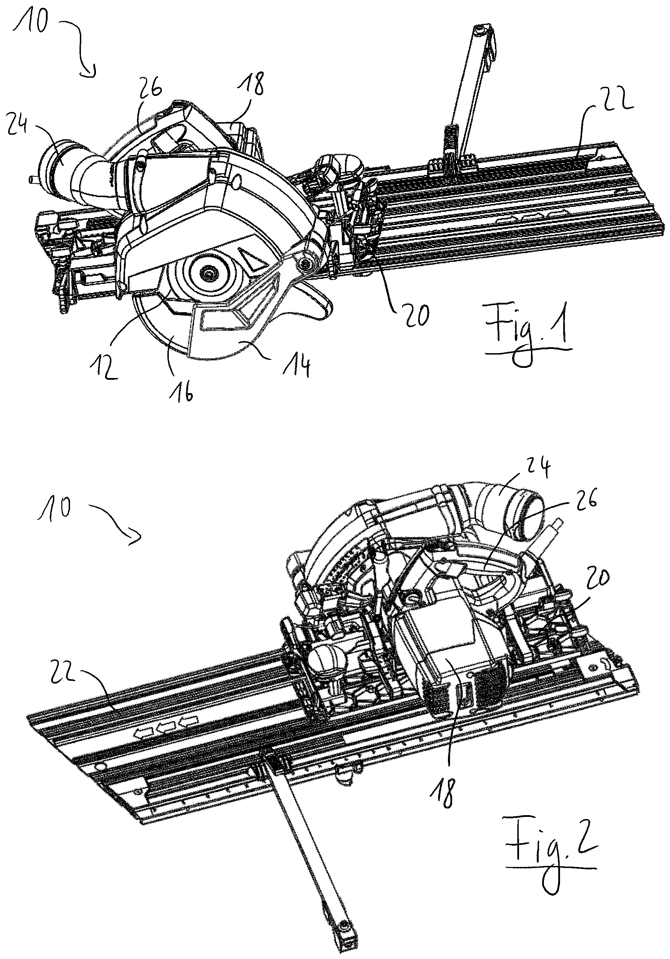

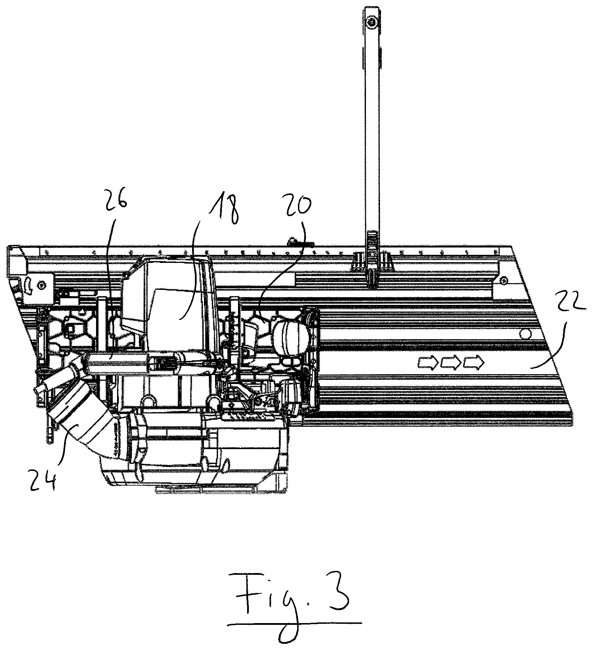

In den Fig. 1 bis 3 ist eine von Hand zu bedienende Nutfräse 10 gezeigt. Diese umfasst einen Fräskopf 12, der im dargestellten Zustand durch Schutzhauben 14, 16 verdeckt ist. Der Fräskopf 12 ist insbesondere ungefähr einige Zentimeter breit, insbesondere wenigstens 1 cm und/oder höchstens 15 cm, insbesondere höchstens 12 cm.

Der Fräskopf 12 ist durch einen Motor 18 zu einer Rotation antreibbar. Beide, der Fräskopf 12 und der Motor 18, sind auf einem Basisteil 20 der Nutfräse 10 gelagert, welches eine Grundplatte bildet und welches entlang einer Bearbeitungsrichtung auf einem hier nicht dargestellten Werkstück entlang geschoben wird, um eine Nut in das Werkstück einzubringen. Zur Führung eines derartigen Bearbeitungsvorgangs ist eine grundsätzlich optionale Führungsschiene 22 vorgesehen, welche auf das Werkstück aufgelegt wird und auf welcher die Nutfräse 10 bzw. das Basisteil 20 in Bearbeitungsrichtung geführt ist. Eine bevorzugte Bearbeitungsrichtung ist auf der Führungsschiene durch Pfeile angezeigt. Zudem sind insbesondere ein Anschluss 24 für ein Absaugsystem und ein Handgriff 26 sichtbar.

Die Führungsschiene 22 kann bevorzugt an dem Basisteil 20, insbesondere lösbar, befestigt sein. Hierdurch ist die Handhabung der Nutfräse 10 besonders einfach. Insbesondere können also Führungsschiene 22 und Basisteil 10 bzw. die Nutfräse 10 fest miteinander verbunden sein, insbesondere eine Einheit bilden. Es kann beispielsweise ein Schnellverschluss für die Verbindung zwischen Führungsschiene 22 und Basisteil 20 vorgesehen sein. Hierdurch lässt sich die Nutfräse 10 mit einem einzigen Handgriff von der Führungsschiene 20 trennen.

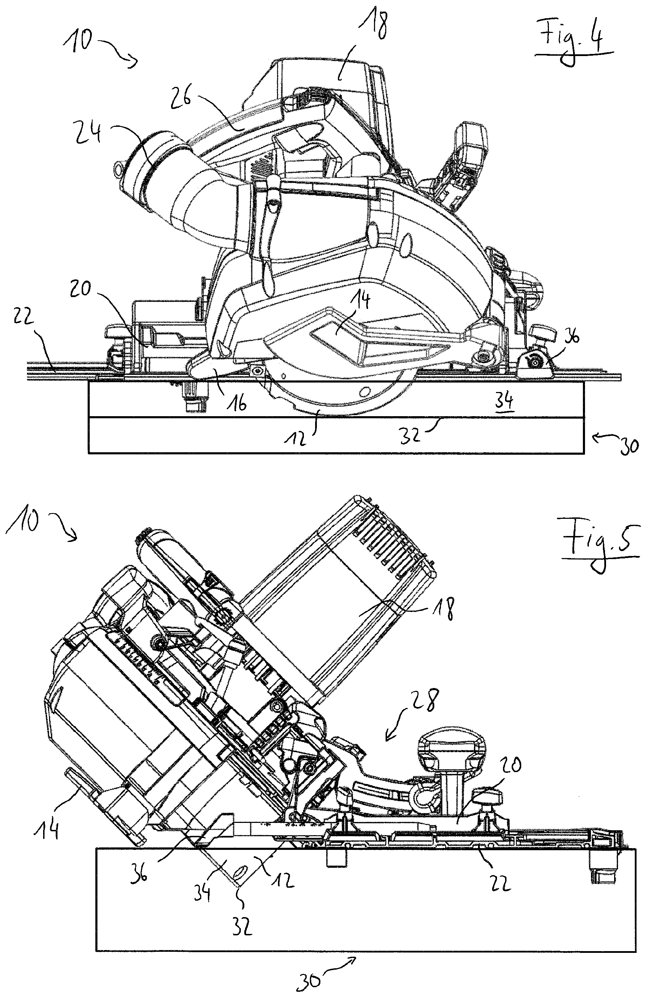

Die Fig. 4 und 5 zeigen die Nutfräse 10 in einer geneigten Stellung in verschiedenen Ansichten. Fig. 4 zeigt eine Seitenansicht. Die Bearbeitungsrichtung verläuft hier von links nach rechts. Fig. 5 zeigt die Nutfräse 10 von vorne, also mit Blickrichtung entgegen der Bearbeitungsrichtung. Es versteht sich, dass die Bearbeitungsrichtung eine bevorzugte Bearbeitungsrichtung ist, die Nutfräse 10 aber grundsätzlich auch in umgekehrter Richtung verfahren werden kann.

Die Nutfräse 10 ist neigbar ausgebildet, d. h. ein Winkel der Rotationsachse des Fräskopfes 12 zur Bearbeitungsrichtung ist einstellbar. Zu diesem Zweck ist eine Neigungsmechanik 28 vorgesehen, die den Fräskopf 12 neigbar relativ zur Basis 20 lagert. Ein gewünschter Neigungswinkel ist über eine hier nicht sichtbare Skala wählbar.

In den Fig. 4 und 5 ist zudem ein Werkstück 30 angedeutet, auf welchem die Führungsschiene 22 und die Nutfräse 10 aufliegen. In Fig. 4 ist ein unteres Ende 32 einer durch den Fräskopf 12 eingebrachten Nut 34 angedeutet. In Fig. 5 entspricht die Form der Nut 34 der sichtbaren Form des Fräskopfes 12 unterhalb der Werkstückoberfläche. Die Nut 34 ist also - bei den hier vorliegenden Geometrieeinstellungen der Nutfräse 10 - im Querschnitt dreieckig.

In den Fig. 4 und 5 ist zudem ein Rissanzeiger 36 sichtbar, der dem Fräskopf 12 vorlaufend ein in Bearbeitungsrichtung rechtes Ende der Nut 34 anzeigt. Der Rissanzeiger 36 ist an der Basis 20 verschieblich befestigt, sodass die angezeigte Nutbreite einstellbar ist.

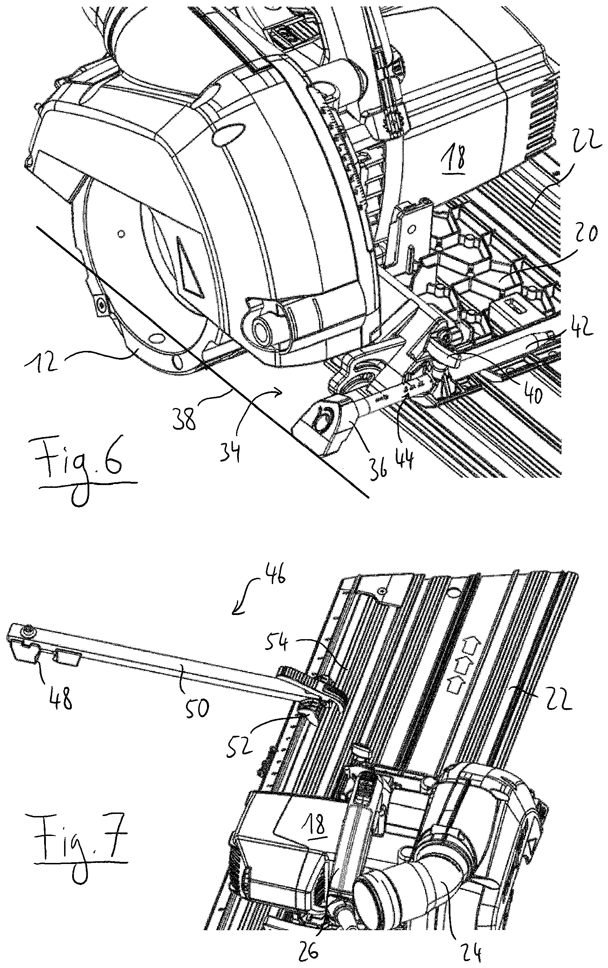

In Fig. 6 ist die Nutfräse 10 unter Ausblendung der Schutzhauben 14, 16 gezeigt, sodass der Fräskopf 12 besser sichtbar ist. Der Rissanzeiger 36 zeigt ein in Bearbeitungsrichtung rechtes Ende 38 der Nut 34 an. In Fig. 4 ist die Nutfräse 10 in einer Ausgangsstellung bzw. einer nicht geneigten Stellung gezeigt, sodass hier die Nut 34 einen Rechteckquerschnitt erhält. In dieser Ausgangsstellung entspricht der Abstand vom der Basis 20 abgewandten Ende des Rissanzeigers 36 zur Basis 20 dem Abstand des der Basis 20 abgewandten Endes des Fräskopfes 12 zur Basis 20.

Der Rissanzeiger 36 ist an der Basis 20 lösbar und verschieblich befestigt, nämlich durch eine Befestigungsschraube 40, die von Hand ohne Werkzeug betätigbar ist. Der Rissanzeiger 36 ist somit einerseits einstellbar und andererseits entfernbar und/oder nachträglich aufsteckbar.

Der Rissanzeiger 36 umfasst einen Stab 42, der an der Basis 20 zur Verschiebung geführt gelagert ist. An diesem Stab 42 greift die Befestigungsschraube 40 zur Befestigung des Stabes 42 an. Der Rissanzeiger 36, insbesondere der Stab 42, umfasst mehrere Markierungen 44, die mehreren Voreinstellungen für den Rissanzeiger 36 entsprechen. Diese Voreinstellungen entsprechen bevorzugt bestimmten Neigungswinkeln des Fräskopfes 12.

In Fig. 7 ist die Nutfräse 10 mit der Führungsschiene 22 gezeigt, wobei ein Seitenanschlagselement 46 an der Führungsschiene 22 befestigt ist. Das Seitenanschlagselement 46 umfasst einen Seitenanschlag 48, der in dieser Ausführungsform von einem Stab 50 gehalten ist. Der Abstand des Seitenanschlags 48 zur Führungsschiene 22 bzw. zum Fräskopf 12 kann beispielsweise einstellbar sein und/oder das Seitenanschlagselement 46 kann zum Beispiel durch verschiedene Anschlagselemente 46 mit unterschiedlichen Abständen austauschbar sein.

Das Seitenanschlagselement 46 ist an der Führungsschiene 22 durch eine Klemmmechanik 52 befestigt. Diese greift in einen Vorsprung 54 der Führungsschiene 22 ein.

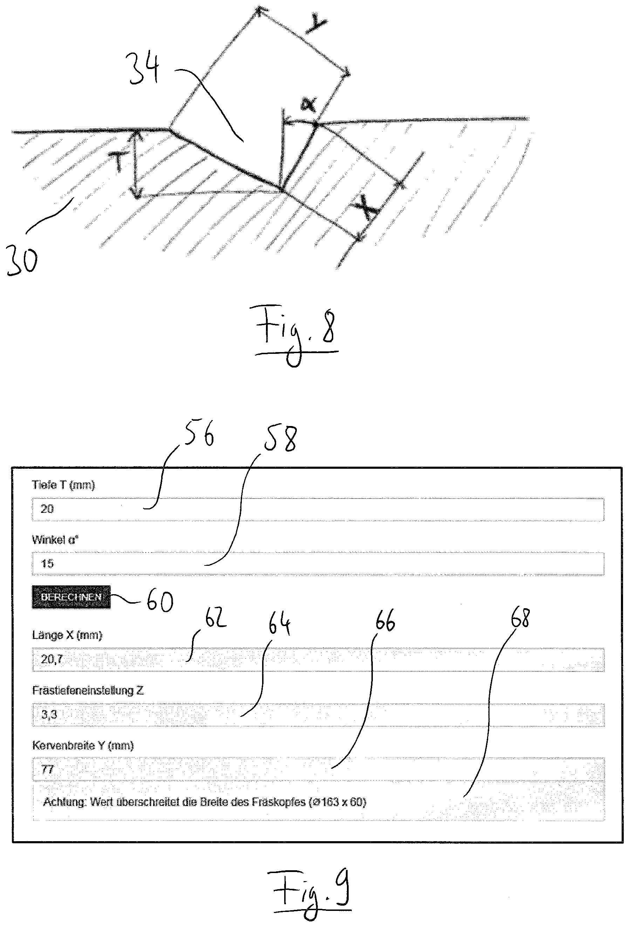

In Fig. 8 ist eine Nut 34 im Querschnitt gezeigt, welche beispielsweise durch die Nutfräse 10 in einer geneigten Stellung eingebracht wurde. Die Nut 34 umfasst eine Tiefe T, eine Länge X, eine sogenannte Kervenbreite Y und einen Winkel α. Letzterer korrespondiert zu einem Neigungswinkel des Fräskopfes 12 während einer Bearbeitung. Die Werte für T, X und Y ergeben sich in Abhängigkeit von dem Winkel α und einer an der Nutfräse 10 eingestellten Bearbeitungstiefe, also aus den Geometrieeinstellungen der Nutfräse 10.

In Fig. 9 ist eine Maske für die automatische Ermittlung der Geometrieeinstellungen, zum Beispiel der Nutfräse 10, dargestellt. Die Maske umfasst Eingabefelder 56, 58 für geometrische Wunscheigenschaften des zu bearbeitenden Werkstücks, nämlich ein Eingabefeld 56 für die Tiefe T und ein Eingabefeld 58 für den Winkel α.

Die Maske umfasst einen Button 60 zum Auslösen einer Ermittlung oder Berechnung der zum Erreichen dieser Eigenschaften nötigen Geometrieeinstellungen der Handwerkzeugmaschine.

Des Weiteren umfasst die Maske mehrere Ausgabefelder 62, 64, 66, 68. Das Ausgabefeld 62 zeigt eine Länge X an. Das Ausgabefeld 64 zeigt eine Frästiefeneinstellung Z an. Diese bildet eine Geometrieeinstellung der Handwerkzeugmaschine, ist also an dieser zum Erreichen der Wunscheigenschaften einzustellen. Das Ausgabefeld 66 zeigt die Kervenbreite Y an. Schließlich ist ein Ausgabefeld 68 vorgesehen, welches zur Anzeige weiterer Informationen und/oder von Warnungen eingerichtet ist. In Fig. 9 ist zum Beispiel eine Warnung darüber angezeigt, dass ein Wert die Breite des Fräskopfes überschreitet, dass also die Nut nicht dreieckig wäre. Welche Werte als Eingabewerte berücksichtigt werden und welche Werte ausgegeben werden, ist grundsätzlich variabel und kann auch anders als hier dargestellt sein.

Die Nutfräse 10 kann zum Beispiel einen maschinenlesbaren Code, zum Beispiel einen QR-Code-Code, umfassen, der mittels eines hierfür eingerichteten Lesegeräts, insbesondere eines Smartphones, gelesen wird. Das Lesegerät baut zum Beispiel anhand des Codes eine Internetverbindung zu einem entfernten Server auf, der zum Beispiel anschließend die in Fig. 9 gezeigte Maske bereitstellt, etwa in einem Internetbrowser des Lesegeräts. Dabei umfasst der Code insbesondere Informationen zum Typ der Handwerkzeugmaschine und/oder ihre geometrischen Informationen, die zur Berechnung der Geometrieeinstellungen nötig sind. Der Server kann anhand des Typs bzw. der geometrischen Informationen die nötigen Geometrieeinstellungen an der Handwerkzeugmaschine zum Erreichen der Wunscheigenschaften berechnen und zum Beispiel durch die Ausgabefelder der Maske der Fig. 9 ausgeben.

### Bezugszeichenliste

- 10: Nutfräse
- 12: Fräskopf
- 14: Schutzhaube
- 16: Schutzhaube
- 18: Motor
- 20: Basisteil
- 22: Führungsschiene
- 24: Anschluss
- 26: Handgriff
- 28: Neigungsmechanik
- 30: Werkstück
- 32: unteres Nutende
- 34: Nut
- 36: Rissanzeiger
- 38: rechtes Nutende
- 40: Befestigungsschraube
- 42: Stab
- 44: Markierung
- 46: Seitenanschlagselement
- 48: Seitenanschlag
- 50: Stab
- 52: Klemmmechanik
- 54: Vorsprung
- 56: Eingabefeld
- 58: Eingabefeld
- 60: Button
- 62: Ausgabefeld
- 64: Ausgabefeld
- 66: Ausgabefeld
- 68: Ausgabefeld

## Patentansprüche

1. Anordnung aus Nutfräse oder Handkreissäge, insbesondere für die Holzbearbeitung, umfassend ein zu einer Rotation antreibbares Schneidwerkzeug (12), insbesondere Fräskopf oder Sägeblatt, und aus einer Führungsschiene (22) zur Auflage auf ein Werkstück,
oder Führungsschiene (22) für eine Nutfräse oder Handkreissäge zur Auflage auf ein Werkstück,
mit einem Seitenanschlag (48) zum Eingriff in eine bestehende Nut oder mit einem seitlichen Ende des zu bearbeitenden Werkstücks (30), wobei der Seitenanschlag (48) einen Abstand von der bestehenden Nut bzw. dem Werkstückende zum Schneidwerkzeug (12) definiert,
**dadurch gekennzeichnet, dass** der Seitenanschlag (48) an einem lösbar an der Führungsschiene (22) befestigten Bauteil (46) angeordnet ist und das Bauteil (46) an der Führungsschiene (22) durch eine Klemmmechanik (52) befestigt ist, die in einen Vorsprung (54) der Führungsschiene (22) eingreift.

2. Anordnung oder Führungsschiene (22) nach Anspruch 1,
wobei der Abstand einstellbar ist.

3. Verfahren zum Ermitteln von Geometrieeinstellungen für eine Handwerkzeugmaschine (10), nämlich eine Nutfräse oder Handkreissäge nach einem der vorstehenden Ansprüche,
wobei die Handwerkzeugmaschine (10) einen maschinenlesbaren Code aufweist,
wobei der maschinenlesbare Code mittels eines hierfür eingerichteten Lesegeräts gelesen wird,
wobei anhand des vom Lesegerät gelesenen Codes geometrische Informationen der Handwerkzeugmaschine (10) ermittelt werden,
wobei eine Eingabemöglichkeit (56, 58) für geometrische Wunscheigenschaften eines zu bearbeitenden Werkstücks (30), die die Dimension eines durch die Handwerkzeugmaschine erzeugbaren Schnitts betreffen, bereitgestellt wird, und
wobei nach Eingabe der Wunscheigenschaften die zum Erreichen dieser Eigenschaften nötigen Geometrieeinstellungen der Handwerkzeugmaschine (10) anhand der geometrischen Informationen der Handwerkzeugmaschine (10) automatisch ermittelt, insbesondere berechnet, und ausgegeben werden.

4. Verfahren nach Anspruch 3,
wobei der maschinenlesbare Code einen QR-Code umfasst.

5. Verfahren nach Anspruch 3 oder 4,
wobei das Lesegerät ein Smartphone oder Tabletcomputer ist.

6. Verfahren nach wenigstens einem der Ansprüche 3 bis 5,
wobei das Lesegerät internetfähig ist und anhand des Codes eine Verbindung zu einem entfernten Server aufgebaut wird,
wobei dem Server ein Typ der Handwerkzeugmaschine (10) und/oder die geometrischen Informationen übermittelt werden oder ihm diese bekannt sind,
wobei der Server die Eingabemöglichkeit (56, 58), die Ermittlung, insbesondere Berechnung, und/oder die Ausgabe (64) bereitstellt.

7. Verfahren nach wenigstens einem der Ansprüche 3 bis 6,
wobei die eingebbaren Wunscheigenschaften eine Bearbeitungstiefe (T), insbesondere senkrecht zu einer Werkstückoberfläche, umfassen.

8. Verfahren nach wenigstens einem der Ansprüche 3 bis 7,
wobei die eingebbaren Wunscheigenschaften eine geneigte Stellung eines Schneidwerkzeugs (12) der Handwerkzeugmaschine (10) betreffen und/oder eine Neigung des Schneidwerkzeugs (12), insbesondere relativ zur Werkstückoberfläche, oder eine hierzu korrespondierende Information umfassen.

## Claims

1. An arrangement of a groove cutter or hand-held circular saw, in particular for woodworking, comprising a cutting tool (12) which can be driven to make a rotation, in particular a milling head or saw blade, and of a guide rail (22) for placing on a workpiece,
or a guide rail (22) for a groove cutter or hand-held circular saw for placing on a workpiece,
having a side abutment (48) for engaging into an existing groove or having a lateral end of the workpiece (30) to be machined, wherein the side abutment (48) defines a spacing of the existing groove or the workpiece end from the cutting tool (12),
**characterized in that** the side abutment (48) is arranged at a component (46) releasably fastened to the guide rail (22) and the component (46) is fastened to the guide rail (22) by a clamping mechanism (52) which engages into a projection (54) of the guide rail (22).

2. An arrangement or a guide rail (22) according to claim 1,
wherein the spacing is settable.

3. A method for determining geometry settings for a hand-held machine tool (10), namely a groove cutter or a hand-held circular saw according to one of the preceding claims,
wherein the hand-held machine tool (10) has a machine-readable code, wherein the machine-readable code is read by means of a reading device configured for this purpose,
wherein geometric information of the hand-held machine tool (10) is determined based on the code read by the reading device,
wherein an input option (56, 58) is provided for desired geometric properties of a workpiece (30) to be machined that relate to the dimension of a cut which can be produced by the hand-held machine tool, and
wherein, after the desired properties have been input, the geometry settings of the hand-held machine tool (10) that are required to achieve these properties are automatically determined, in particular calculated, and output based on the geometric information of the hand-held machine tool (10).

4. A method according to claim 3,
wherein the machine-readable code comprises a QR code.

5. A method according to claim 3 or 4,
where the reading device is a smartphone or a tablet computer.

6. A method according to at least one of the claims 3 to 5,
wherein the reading device is internet-enabled and a connection to a remote server is established using the code,
wherein a type of the hand-held machine tool (10) and/or the geometric information is/are transmitted to the server or is/are known to the server,
wherein the server provides the input option (56, 58), the determination, in particular the calculation, and/or the output (64).

7. A method according to at least one of the claims 3 to 6,
wherein the desired properties that can be input comprise a machining depth (T), in particular perpendicular to a workpiece surface.

8. A method according to at least one of the claims 3 to 7,
wherein the desired properties that can be input relate to an inclined position of a cutting tool (12) of the hand-held machine tool (10) and/or comprise an inclination of the cutting tool (12), in particular relative to the workpiece surface, or information corresponding thereto.

## Revendications

1. Ensemble constitué d'une fraiseuse à rainurer ou d'une scie circulaire portative, en particulier pour travailler le bois, comprenant un outil de coupe (12), en particulier une tête de fraisage ou une lame de scie, apte à être entraîné(e) en rotation, et d'un un rail de guidage (22) destiné à venir en appui sur une pièce à usiner,
ou rail de guidage (22) pour une fraiseuse à rainurer ou une scie circulaire portative, destiné à venir en appui sur une pièce à usiner,
comprenant une butée latérale (48) destinée à s'engager dans une rainure existante ou à s'engager avec une extrémité latérale de la pièce à usiner (30), la butée latérale (48) définissant une distance entre la rainure existante ou l'extrémité de la pièce à usiner et l'outil de coupe (12),
**caractérisé en ce que**
la butée latérale (48) est disposée sur un composant (46) fixé de manière amovible au rail de guidage (22), et le composant (46) est fixé au rail de guidage (22) par un mécanisme de serrage (52) qui s'engage dans une saillie (54) du rail de guidage (22).

2. Ensemble ou rail de guidage (22) selon la revendication 1,
dans lequel la distance est réglable.

3. Procédé pour déterminer des réglages géométriques pour une machine-outil portative (10), à savoir pour une fraiseuse à rainurer ou une scie circulaire portative selon l'une des revendications précédentes,
dans lequel la machine-outil portative (10) présente un code lisible par la machine,
le code lisible par la machine est lu au moyen d'un appareil de lecture conçu à cet effet,
des informations géométriques de la machine-outil portative (10) sont déterminées à l'aide du code lu par l'appareil de lecture,
il est prévu une possibilité d'entrée (56, 58) pour des propriétés géométriques souhaitées d'une pièce à usiner (30), lesquelles concernent la dimension d'une coupe à réaliser par la machine-outil portative, et
une fois que les propriétés souhaitées sont entrées, les réglages géométriques de la machine-outil portative (10) nécessaires pour atteindre ces propriétés sont déterminés, en particulier calculés, et émis automatiquement à l'aide des informations géométriques de la machine-outil portative (10).

4. Procédé selon la revendication 3,
dans lequel le code lisible par la machine comprend un code QR.

5. Procédé selon la revendication 3 ou 4,
dans lequel l'appareil de lecture est un smartphone ou un ordinateur tablette.

6. Procédé selon l'une au moins des revendications 3 à 5,
dans lequel l'appareil de lecture est compatible avec Internet, et une connexion avec un serveur distant est établie à l'aide du code,
un type de machine-outil portative (10) et/ou les informations géométriques sont transmis au serveur ou lui sont connus,
le serveur assure la possibilité d'entrée (56, 58), la détermination, en particulier le calcul, et/ou la sortie (64).

7. Procédé selon l'une au moins des revendications 3 à 6,
dans lequel les propriétés souhaitées à entrer comprennent une profondeur d'usinage (T), en particulier perpendiculaire à une surface de la pièce à usiner.

8. Procédé selon l'une au moins des revendications 3 à 7,
dans lequel les propriétés souhaitées à entrer concernent une position inclinée d'un outil de coupe (12) de la machine-outil portative (10) et/ou comprennent une inclinaison de l'outil de coupe (12), en particulier par rapport à la surface de la pièce à usiner, ou une information correspondante.
